# EUROPÄISCHE PATENTSCHRIFT

(11) **EP 1 624 167 B1**
(45) Veröffentlichungstag und Bekanntmachung des Hinweises auf die Patenterteilung: **10.10.2007**
(21) Anmeldenummer: 05016362.5
(22) Anmeldetag: 28.07.2005
(51) Int. Cl.: F01P 3/20, B60T 1/087, B60T 10/02

(54) **Ein für Nutzfahrzeuge geregelter Systemdruck in einem Kühlkreislauf, in welchem ein Retarder angeordnet ist**
Controlled pressure system for vehicles of a cooling circuit, in which a retarder is placed
Système commandé de pression pour des véhicules d'un circuit de refroidissement, en lequel un ralentisseur est placé

(30) Priorität: 04.08.2004 DE 102004037732
(43) Veröffentlichungstag der Anmeldung: 08.02.2006
(73) Patentinhaber: MAN Nutzfahrzeuge Aktiengesellschaft, 80995 München (DE)
(72) Erfinder: Martens, Robert, Dipl.-Ing. (FH), 85757 Karlsfeld (DE)

(56) Entgegenhaltungen:
- EP-A- 1 251 050
- DE-C1- 3 713 580
- US-A- 2 750 009
- US-A- 5 333 707

## Beschreibung

Die vorliegende Erfindung betrifft einen geregelten Systemdruck in einem Kühlkreislauf für Nutzfahrzeuge, mit einem mit Kühlfluid einer Verbrennungskraftmaschine betreibbaren Retarder, der mittels einer Steuerschaltung aktivierbar bzw. deaktivierbar ist, und mit einer Ausgleichsleitung für den Retarder, die in einen Ausgleichsbehälter des Kühlfluidsystems mündet. Die Erfindung betrifft weiterhin ein Verfahren zum Betrieb einer Verbrennungskraftmaschine eines Nutzfahrzeuges, die eine Dauerbremseinrichtung mit einem mit Kühlfluid der Verbrennungskraftmaschine betreibbaren Retarder aufweist.

In Fahrzeugantrieben mit Verbrennungskraft mit Verbrennungskraftmaschinen ist als Mittel zur Geschwindigkeits- bzw. Drehzahlreduzierung oftmals ein Retarder integriert. Ein derartiger Retarder wirkt als verschleißfreie Dauerbremseinrichtung und kann durch den Fahrzeugführer oder automatisch aktiviert bzw. deaktiviert werden. Da Verbrennungskraftmaschinen zudem mit einem Kühlfluidsystem zur Regulierung einer Betriebstemperatur versehen sind, kann als Arbeitsmedium für den Retarder diese Kühlfluid verwendet werden.

In diesem Zusammenhang ist aus der DE 37 13 580 C1 die Antriebsanlage eines Kraftfahrzeugs mit einem hydrodynamischen Retarder bekannt, der mit der Kurbelwelle in dauernder Drehverbindung steht und durch das Kühlmittel angetrieben wird. Die Anordnung ist in diesem Fall derart ausgeführt, dass der Retarder auch im ungebremsten Zustand des Fahrzeugs die Funktion einer Kühlmittelpumpe übernimmt. Der Betrieb des Retarders wird im Wesentlichen durch Umschaltung einer Ventilkombination zwischen Retarder und Motor realisiert.

Weiterhin ist eine derartige Dauerbremseinrichtung einer Antriebseinheit, bei der als Arbeitsmedium des Retarders eine Kühlflüssigkeit verwendet wird, beispielsweise aus der EP 0 972 916 B1 bekannt. Derartige Retarder, deren Arbeitsmedium Kühlflüssigkeit einer Brennkraftmaschine ist, werden oftmals auch als Primärretarder bezeichnet.

Um eine Bremswirkung des deaktivierten hydrodynamischen Retarders weitestgehend zu reduzieren, muss dessen Arbeitsraum vom Kühlmittel entleert werden. Am Ende einer Bremsung mit einem derartigen Retarder kann eine Druckspitze entstehen, da der Arbeitsraum des Retarders schnell entleert und das Kühlmittel wieder dem Kühlsystem zugeführt wird. Bei manchen Anlagen erweist sich eine bereits vorhandene Druckentlastung in den Kühlfüssigkeitsausgleichsbehälter als nicht ausreichend, da immer noch gegen den vorhandenen Systemdruck gearbeitet werden muss.

Das Ziel der vorliegenden Erfindung besteht darin, eine Dauerbremseinrichtung für Nutzfahrzeuge mit einem mit Kühlfluid betreibbaren Retarder zur Verfügung zu stellen, bei der das Auftreten von unzulässig hohen Druckspitzen beim Abschalten des Retarders im Kühlsystem vermieden werden und bei der ein weitgehend konstanter Systemdruck aufrecht erhalten wird.

Dieses Ziel der Erfindung wird mit dem Verfahrensanspruch 1 und mit dem Gegenstand des unabhängigen Anspruchs 4 erreicht. Merkmale vorteilhafter Weiterbildungen der Erfindung ergeben sich aus den abhängigen Ansprüchen.

Das Verfahren nach Anspruch 1 sieht vor, dass bei Beginn des Abschaltvorganges des Retarders der Druck im Kühlsystem auf atmosphärischen Druck gebracht wird. Das Ablassen des Druckes ist derart mit einer Steuerung für den Retarder gekoppelt, dass ein Druckentlastungsventil bei Abschaltungsbeginn des Retarders schnell öffnet. Hierdurch erfolgt ein Druckabbau im Kühlsystem auf atmosphärischen Druck und dadurch können keine Druckspitzen mehr im Ausgleichsbehälter bzw. im Kühlsystem entstehen, die zu Schäden im Kühlsystem führen könnten. Der Abbau des Systemdruckes muss schnell erfolgen, weil der ganze Abschaltvorgang des Retarders im Zehntel-Sekundenbereich liegt. Das Druckentlastungsventil ist vorzugsweise ein Entlüftungsventil, das in die Atmosphäre entlüftet. Auf diese Weise stellt sich im Ausgleichsbehälter quasi von selbst in Abhängigkeit der Ausdehnung des Kühlmediums sowie der Luft der Systemdruck ein.

Das Druckentlastungsventil ist weiterhin vorzugsweise ein mechanisches Ventil, das mittels eines externen Steuerdrucks öffenbar bzw. schließbar ausgestaltet ist, wobei der Steuerdruck von der Regelung für den Retarder geliefert wird. Hierdurch wird bei Abschaltbeginn des Retarders unmittelbar ein Steuersignal für das Druckentlastungsventil zur Verfügung gestellt, so dass dieses öffnet und unzulässig hohe Druckspitzen im Ausgleichsbehälter nicht entstehen lässt und damit kritische Druckspitzen aus dem Kühlsystem fernhält.

Das Druckentlastungsventil bleibt solange geöffnet, bis der Abschaltvorgang der Retarders beendet ist.

Nach dem Abschaltvorgang wird durch ein Schaltventil wieder Druckluft in der Steuerleitung dem Druckentlastungsventil zugeführt, wodurch das Druckentlastungsventil schließt.

In diesem Moment ist aber der erforderliche Überdruck (ca. 0,7bar) im Kühlsystem noch nicht vorhanden. Deshalb ist erfindungsgemäß eine weitere Leitung mit einem Druckbegrenzungsventil zur Befüllung mit Druckluft für den Ausgleichsbehälter vorgesehen.

Die Leitung ist parallel zur Steuerleitung für das Druckentlastungsventil angeordnet. Während durch einen anliegenden Steuerdruck das Druckentlastungsventil, nach dem Abschaltvorgang des Retarders, schließt, wird gleichzeitig über die parallele Befüllungsleitung und das darin angeordnete Druckbegrenzungsventil das Kühlsystem mit dem nötigen Druck wieder "aufgepumpt". Dadurch wird erreicht, dass nach einem Bremsvorgang mit der Dauerbremse, sofort wieder der erforderliche Druck im Kühlsystem hergestellt wird. Die erfindungsgemäße Vorrichtung hat weiterhin den Vorteil, dass, wenn der Systemdruck nach z. B. nach einer (längeren) Stillstandszeit des Fahrzeugs abgefallen ist, bei Wiederinbetriebnahme des Fahrzeugs der Kühlkreislauf sofort wieder mit Druck versorgt wird. Dadurch wird z. B. Kavitation am Eingang der Wasserpumpe von Anfang an vermieden.

Der Ausgleichsbehälter kann insbesondere zwei oder mehr Kammern aufweisen, die über eine Steigleitung oder über ein Labyrinthsystem miteinander verbunden sind. Die erste Kammer weist vorzugsweise zumindest eine teilweise Befüllung mit Kühlmedium bzw. Kühlfluid auf, während die zweite Kammer im Normalfall Luft aufweist und mit einem Arbeitsventil und der erfindungsgemäßen Anordnung des Druckentlastungsventils sowie mit der Befüllungsanordnung in Verbindung steht.

Die beiden Kammern stehen über eine Steigleitung miteinander in Verbindung. Eine bereits vorhandene Druckausgleichsleitung vom Retarder mündet in die erste Kammer des Ausgleichsbehälters, die mit Kühlfluid zumindest teilweise gefüllt ist. An dem Ausgleichsbehälter ist das genannte Arbeitsventil zur Einhaltung eines Druckbereiches im Kühlfluidsystgem angeordnet, wobei dieser Druckbereich typischerweise von ca. 0,7 bar Überdruck bis 0,9 bar absolut liegt.

Aus dem Stand der Technik ist bekannt dass die Kavitationsneigung am Kühlmitteleintritt der Kühlmittelpumpe sehr sensibel ist. Die genannte Kavitalionsneigung hängt vom Druck im Kühlsystem und der Kühlmitteltemperatur ab. Der erforderliche Druck im Kühlsystem stellt sich ohne die Erfindung erst nach Erreichen der Betriebstemperatur des Kühlsystems bzw. der Motortemperatur durch die Wärmeausdehnung des Kühlmediums und durch eine erhöhte Lufttemperatur im Ausgleichsbehälter, die durch das Kühlmedium erfolgt, ein.

Weiterhin ist aus dem Stand der Technik bekannt, dass durch eine zu geringe Menge an Kühlmittel, der erforderliche Systemdruck im Kühlsystem nur zögerlich oder gar nicht mehr erreicht.

Sowohl in dem erstgenannten Fall, in welchem die Betriebstemperatur noch nicht erreicht ist, als auch im zweitgenanntem Fall, in welchem das Kühlmittel zu wenig ist, kann es an der Kühlmittelpumpe zu Kavitation führen.

Diese Kavitation kann im Laufe der Zeit so schwerwiegend werden, dass der nötige Kühlmittelumlaufstrom nicht mehr erreicht wird und damit schwere Schäden am Antriebsmotor auftreten können.

Nach der Erfindung wird über die Befüllungsleitung und dem darin angeordneten Druckbegrenzungsventil Druckluft sowohl gleich nach dem Start des Antriebsmotors, als auch nach einem Bremsvorgang mit der Dauerbremse dem Kühlsystem zugeführt, so dass sich ein annähernd immer gleicher Systemdruck im Kühlsystem eingestellt. Dies gilt auch nach einer Nachfüllung von Kühlmittel und nach einem Reparaturfall, wenn also das Kühlsystem nach einem Eingriff auf atmosphärischen Druck gebracht wurde.

Der Retarder ist mittels einer Steuerschaltung aktivierbar bzw. deaktivierbar. Das im Retarder befindliche Kühlfluid wird bei dessen Deaktivierung über eine Rücklaufleitung weitgehend vollständig in den Kühlraum des Antriebsmotors, also in dessen Kühlfluidsystem gefördert. Die Druckspitzen werden bereits über ein Ventil, das in der Leitung, die vom Retarder zum Ausgleichsbehälter führt, abgebaut. Der Druckabbau ist aber nicht ausreichend, weil gegen den bestehenden Systemdruck gearbeitet wird.

Das erfindungsgemäße Verfahren ermöglicht die Vermeidung von schädlichen Druckspitzen im Kühlfluidsystem der Verbrennungskraftmaschine.

Weitere Aspekte und Vorteile der Erfindung ergeben sich aus den abhängigen Ansprüchen sowie der nachfolgenden Figurenbeschreibung.

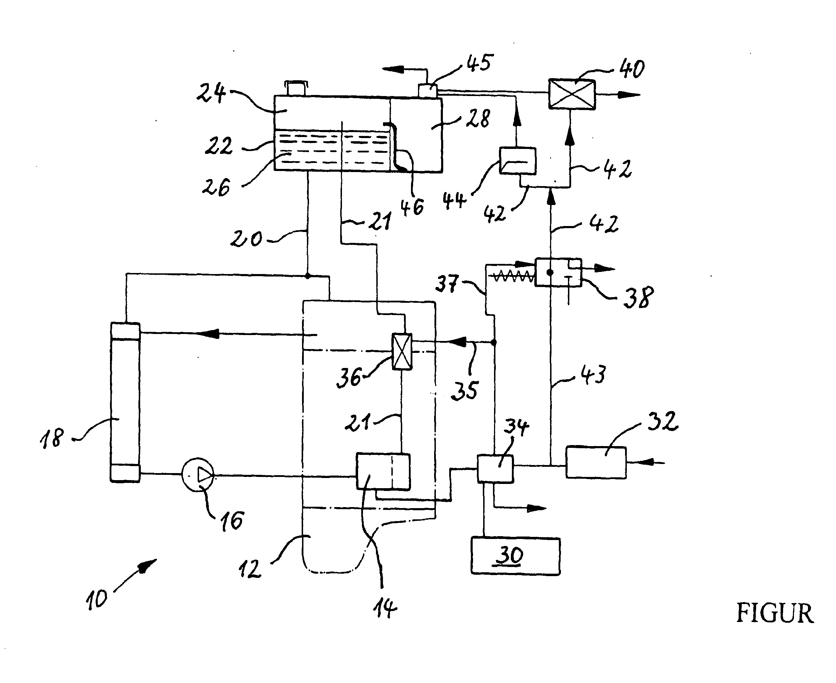

Die Erfindung wird nachfolgend anhand eines bevorzugten Ausführungsbeispiels unter Bezugnahme auf die beiliegende Zeichnung näher erläutert.

Die Figur zeigt ein schematisches Blockschaltbild einer erfindungsgemäßen Dauerbremseinrichtung sowie eines Kühlsystems einer Verbrennungskraftmaschine.

Die schematische Darstellung der Figur verdeutlicht den Aufbau eines Kühlsystems 10 einer Verbrennungskraftmaschine 12, die einen sogenannten Primärretarder 14 aufweist, dessen Arbeitsmedium Kühlfluid der Verbrennungskraftmaschine 12 ist. Das Kühlfluid wird mittels einer Umwälzpumpe 16 durch einen Wärmetauscher 18, sowie durch den Motorblock der Verbrennungskraftmaschine 12 gefördert. Eine Kühlerentlüftungsleitung und eine Motorentlüftungsleitung 20 steht in Verbindung mit einem Ausgleichsbehälter 22, der wenigstens zwei Kammern 24 und 28 aufweist. Die erste Kammer 24 des Ausgleichsbehälters 22 ist zumindest teilweise mit Kühlfluid 26 gefüllt. Die zweite Kammer 28 ist im Normalfall mit Luft gefüllt und steht mit der ersten Kammer 24 beispielsweise über eine Steigleitung 46, die einen relativ großen Querschnitt haben muss, in Verbindung.

Die Steigung 46 hat bei korrektem Kühlmittelpegel in der Kammer 24 mehrere Aufgaben. Zum einen muss bei sich erwärmendem Kühlmittel das Kühlmittel das über einem bestimmten Pegel ist, in die Kammer 28 geleitet werden. Der erhöhte Kühlmittelpegel kann durch die Wärmeausdehnung des Kühlmittels und weiterhin durch z. B. ein Schrägstehen des Fahrzeugs begründet sein.

Weiterhin soll dieses in die Kammer 28 geleitete Kühlmittel wieder in die Kammer 24 zurückholbar sein. Dies kann dann erfolgen, wenn z. B. das Fahrzeug stillgesetzt wird, da dann in der Kammer 24 leichter Unterdruck entsteht, mit dessen Wirkung dann das Kühlmittel über die Steigleitung 46 wieder in die Kammer 24 gesaugt wird. Weiterhin ist die Steigleitung 46 eine Druckausgleichsleitung für die Luft in beiden Kammern 24, 28.

Der hydrodynamische Retarder 14 ist in den Kühlkreislauf 10 der Verbrennungskraftmaschine 12 integriert. Damit ist in der gezeigten Ausführungsform des Retarders das Arbeitsmedium des Retarders gleichzeitig das Kühlmedium der Verbrennungskraftmaschine des Nutzfahrzeuges. Um die Leerlaufverluste gering zu halten, muss der Retarder 14 im NichtBremsbetrieb entleert sein. Bei dem Entleervorgang können jedoch Druckspitzen im Kühlsystem 10 erzeugt werden, die mit Hilfe der Erfindung vermieden werden können.

Das Schema der Figur zeigt den Schaltzustand bei nicht betätigtem Retarder.

Der Rechner 30 für den Retarder hat im Retarder ein Ventil so geschaltet, dass das Kühlmittel von der Kühlmittelpumpe in den Verbrennungsmotor geleitet wird. Der Retarder ist ohne Arbeitsmedium, läuft aber, vom Verbrennungsmotor angetrieben, mit.

Aus dem Druckluftvorratsbehälter 32 wird Druckluft über das Schaltventil 34 und die Leitung 35 zum Ventil 36 geleitet. Das Ventil 36 ist in diesem Beispiel ein mechanisches Ventil 36, das bei Beaufschlagung mit Druckluft schließt, d. h. die Leitung 21 ist geschlossen. Dieser Arm der Schaltung ist Stand der Technik und aus dem eingangs genannten EP-Patent bekannt.

Erfindungsgemäß ist nun ein weiteres Schaltventil 38 angeordnet, das im gezeigten Schaltzustand über die Leitungen 43 und 42 Druckluft an ein erfindungsgemäß angeordnetes Druckbegrenzungsventil 44 und ein Schaltventil 40 liefert.

Das Schaltventil 40 schließt bei Beaufschlagung mit Druckluft die Leitung zum Ausgleichsbehälter. Damit kann der Systemdruck im Kühlsystem aufrecht erhalten bleiben.

Über das Druckbegrenzungsventil 44 wird ein bestimmter Systemdruck in das Kühlsystem eingesteuert. Dies ist ein zusätzlicher Vorteil dieser Anordnung, da der Systemdruck im Kühlsystem kurz nach der Inbetriebnahme des Fahrzeugs erreicht wird. Wenn während des Fahrzeugbetriebs ein höherer Systemdruck als der eingesteuerte Systemdruck auftritt, so wird der maximal zulässige Systemdruck durch das Arbeitsventil 45 begrenzt. Dieses Arbeitsventil 45 ist aber nicht in der Lage, Druckspitzen im Kühlsystem die unterhalb des Grenzdruckes liegen, aber kritischer sind, abzubauen.

Wenn der Retarder nun über die Steuerung 30 eingeschaltet wird, ändert sich an den Einstellungen im Blockschaltbild nichts, bis auf eine interne Schaltung im Retarder (nicht dargestellt) die ein Ventil so steuert, dass der Rotor und der Stator der Dauerbremse mit dem Kühlmittel der Brennkraftmaschine beaufschlagt werden. Das Kühlmittel strömt nach dem Retarder wieder in den Kühlkreislauf der Brennkraftmaschine.

Wenn der Abschaltvorgang des Retarders eingeleitet wird, stellt die Steuerung 30 das Schaltventil 34 so, dass die Leitungen 35 und 37 entlüftet, d. h. die Druckluft in den Leitungen ins Freie abgelassen werden.

Damit öffnet das Ventil 36 die Leitung 21 (bekannt).

Weiterhin schaltet, dadurch, dass die Leitung 37 entlüftet wird, das Magnetventil 38 in seine andere Stellung, in der die Druckluftleitung 43 geschlossen und die Druckluftleitung 42 entlüftet wird. Durch das Entlüften der Leitung 42 wird das Schaltventil 40 geöffnet, wodurch der Systemdruck im Kühlsystem auf atmosphärischen Druck abgelassen wird.

Die entstehende Druckspitze im Kühlsystem, die durch das Abschalten des Retarders bzw. das Herauspumpen des Kühlmittels aus dem Retarder entsteht, muss nun nur gegen den atmosphärischen Druck arbeiten, so dass die Druckspitze erheblich abgesenkt wird und damit den Bauteilen des Kühlsystems nicht mehr schadet.

Nach Beendigung des Abschaltvorganges wird der Schaltzustand durch die Steuerung 30 wieder so hergestellt, wie das Blockschaltbild dies zeigt.

Der Systemdruck im Kühlsystem wird durch Zufuhr von Druckluft über das Druckbegrenzungsventil 44 schnell wieder hergestellt, so dass die Kühlmittelpumpe nicht im Kavitationsbereich läuft.

Wie bereits erwähnt wird aber auch nach jedem Eingriff in das Kühlsystem, z. B. wenn Kühlmedium nachgefüllt wird oder ein entsprechendes Bauteil ausgewechselt wurde, oder bei Wiederinbetriebnahme des Fahrzeugs und wenn kein Überdruck mehr im Kühlsystem vorhanden ist, über die genannte Zufuhr von Druckluft, ein gewünschter Druck im Kühlsystem eingestellt.

### Bezugszeichenliste

- 10: Kühlsystem
- 12: Bremskraftmaschine
- 14: Primärretarter (Retarder)
- 16: Kühlmittelpumpe
- 18: Kühler
- 20: Entlüftungsleitung für Motor und Kühler
- 21: Druckentlastungsleitung
- 22: Ausgleichsbehälter
- 24: Kammer im Ausgleichsbehälter
- 26: Kühlmittel
- 28: Kammer im Ausgleichsbehälter
- 30: Steuergerät für den Retarder
- 32: Druckluftvorratsbehälter
- 34: Schaltventil
- 35: Druckluftleitung
- 36: Druckentlastungsventil
- 37: Druckluftleitung
- 38: Magnetschaltventil
- 40: Druckentlastungsventil
- 42: Druckluftleitung
- 44: Druckbegrenzungsventil
- 45: Arbeitsventil mit Stutzen des Ausgleichsbehälters
- 46: Steigleitung

## Patentansprüche

1. Verfahren für einen für Nutzfahrzeuge geregelten Systemdruck im Kühlkreislauf einer Brennkraftmaschine (12), in welchem ein Retarder (14) angeordnet ist und der Retarder (14) das Kühlmittel der Brennkraftmaschine (12) als Arbeitsmedium hat, wobei der Retarder (14) ständig von der Brennkraftmaschine (12) angetrieben ist, im Bremsbetrieb mit Kühlmittel beaufschlagt wird und im Übergang vom Bremsbetrieb in den Nichtbremsbetrieb-Abschaltvorgang-das Arbeitsmedium Kühlmittel in den Kühlreislauf der Brennkraftmaschine (12) zurückpumpt und ein für diesen Rückpumpvorgang vorgesehenes Druckentlastungsventil (36), das zwischen Retarder (14) und Ausgleichsbehälter (22) angeordnet ist, aufweist, wobei der Ausgleichsbehälter (22) einen Systemdruck hat, der sich in Abhängigkeit der Ausdehnung des Kühlmediums und der Ausdehnung der Luft im Ausgleichsbehälter (22) einstellt, und mit einer Druckluftversorgung an Bord, **dadurch gekennzeichnet, dass** bei Beginn des Abschaltvorgangs des Retarders (14) das Kühlsystem (10) auf atmosphärischen Druck abgelassen wird und nach dem Abschaltvorgang des Retarders (14) sowie bei Inbetriebnahme des Fahrzeugs das Kühlsystem (10) über die an Bord vorhandene Druckluft auf einen gewünschten, einstellbaren Systemdruck gebracht wird.

2. Geregelter Systemdruck nach Anspruch 1, **dadurch gekennzeichnet, dass** der Systemdruck am Ausgleichsbehälter (22) geregelt wird.

3. Geregelter Systemdruck nach Anspruch 1, **dadurch gekennzeichnet, dass** die Signale für die Schaltung der Ventile von der Steuereinrichtung (30) für den Retarder (14) kommen.

4. Vorrichtung für einen für Nutzfahrzeuge geregelten Systemdruck im Kühlkreislauf einer Brennkraftmaschine (12), in welchem ein Retarder (14) angeordnet ist und das Kühlmittel der Brennkraftmaschine (12) als Arbeitsmedium hat, mit einem Retarder (14) der von der Brennkraftmaschine (12) ständig angetrieben ist und im Bremsbetrieb mit Kühlmittel beaufschlagt wird und im Übergang vom Bremsbetrieb in den Nichtbremsbetrieb Abschaltvorgang das Arbeitsmedium Kühlmittel in den Kühlreislauf der Brennkraftmaschine (12) zurückpumpt und ein für diesen Rückpumpvorgang vorgesehenes Druckentlastungsventil (36), das zwischen Retarder (14) und einem Ausgleichsbehälter (22) angeordnet ist, aufweist, wobei der Ausgleichsbehälter (22) einen Systemdruck hat, der sich in Abhängigkeit der Ausdehnung des Kühlmediums und der Ausdehnung der Luft im Ausgleichsbehälter (22) einstellt, und mit einer Druckluftversorgung an Bord, **dadurch gekennzeichnet, dass** von der Steuerung (30) für die Schaltung des Retarders (14) das Signal für die Abschaltung des Retarders (14) verwendet wird und der Druck im Ausgleichsbehälter (22) für die Zeit des Abschaltvorganges über ein Magnetschaltventil (38) und über ein Druckentlastungsventil (40) auf atmosphärischen Druck abgesenkt wird und nach dem Abschaltvorgang des Retarders (14) und bei jedem neuen Fahrzeugstart der Druck im Ausgleichsbehälter über eine Druckluftversorgung (32) und über die Ventilanordnung (38,44,40) sofort auf einen einstellbaren Systemdruck gebracht wird.

## Claims

1. Procedure for a system pressure, controlled for commercial vehicles, in the cooling circuit of an internal combustion engine (12), in which cooiing circuit a retarder (14) using the coolant of the internal combustion engine (12) as working medium is arranged, whereby the retarder (14) is constantly driven by the internal combustion engine (12), is charged with coolant in braking operations, pumps the working medium "coolant" back into the cooling circuit of the internal combustion engine (12) during the transition from the braking operation to the non-braking-operation and features a pressure-relief valve (36) intended for this return pumping action and arranged between the retarder (14) and the expansion tank (22), whereby the expansion tank (22) has a system pressure generated in the expansion tank (22) as a function of the expansion of the cooling medium and air, and with a compressed-air supply system on board, **characterised in that** at the start of the switch-off procedure of the retarder (14) the cooling system (10) is depressurised to atmospheric pressure and, after the switch-off procedure of the retarder (14) and the start of the vehicle, the cooling system (10) can be brought to an adjustable system pressure via the compressed air present on board.

2. Controlled system pressure according to Claim 1, **characterised in that** the system pressure is controlled at the expansion tank (22).

3. Controlled system pressure according to Claim 1, **characterised in that** the signals for the switching of the valves are supplied by the control unit (30) for the retarder (14).

4. Procedure for a system pressure, controlled for commercial vehicles, in the cooling circuit of an internal combustion engine (12), in which cooling circuit a retarder (14) using the coolant of the internal combustion engine (12) as working medium is arranged and constantly driven by the internal combustion engine (12), is charged with coolant in braking operations, pumps the working medium "coolant" back into the cooling circuit of the internal combustion engine (12) during the transition from the braking operation to the non-braking-operation and features a pressure-relief valve (36) intended for this return pumping action and arranged between the retarder (14) and an expansion tank (22), whereby the expansion tank (22) has a system pressure generated in the expansion tank (22) as a function of the expansion of the cooling medium and air, and with a compressed-air supply system on board, **characterised in that** the signal for switching off the retarder (14) is used by the control unit (30) for the switching of the retarder (14) and the pressure in the expansion tank (22) is lowered to atmospheric pressure via a solenoid switching valve (38) and a pressure-relief valve (40) for the time of the switch-off procedure and, after the switch-off procedure of the retarder (14) and at every fresh start of the vehicle, the pressure in the expansion tank can be immediately brought to an adjustable system pressure via a compressed-air supply system (32) and via the valve arrangement (38, 44, 40).

## Revendications

1. Procédé pour une pression de système régulée pour véhicules industriels dans le circuit de refroidissement d'un moteur à combustion interne (12) dans lequel est disposé un ralentisseur (14) utilisant le liquide de refroidissement du moteur à combustion interne (12) comme moyen de travail, auquel cas le ralentisseur (14) est entraîné en permanence par le moteur à combustion interne (12), est alimenté en liquide de refroidissement en mode de freinage, et renvoie le moyen de travail liquide de refroidissement par pompage dans le circuit de refroidissement du moteur à combustion interne (12) pendant la transition du mode de freinage à l'opération de coupure du mode de non freinage et présente une valve de décompression (36) prévue pour l'opération de repompage, qui est disposée entre le ralentisseur (14) et le vase d'expansion (22), auquel cas le vase d'expansion (22) possède une pression de système qui se règle en fonction de l'expansion du moyen de refroidissement et de l'expansion de l'air dans le vase d'expansion (22), et avec une alimentation en air comprimé à bord, **caractérisé en ce que**, lors du début de l'opération de coupure du ralentisseur (14), la pression dans le système de refroidissement (10) est abaissée à la pression atmosphérique et, après l'opération de coupure du ralentisseur (14) ainsi que lors de la mise en marche du véhicule, le système de refroidissement (10) est amené à une pression de système réglable souhaitée par le biais de l'air comprimé existant à bord.

2. Pression de système régulée selon la revendication 1, **caractérisée en ce que** la pression de système est réglée au niveau du vase d'expansion (22).

3. Pression de système régulée selon la revendication 1, **caractérisée en ce que** les signaux arrivent du dispositif de pilotage (30) du ralentisseur (14) pour commander les vannes.

4. Procédé pour une pression de système régulée pour véhicules industriels dans le circuit de refroidissement d'un moteur à combustion interne (12) dans lequel est disposé un ralentisseur (14) utilisant le liquide de refroidissement du moteur à combustion interne (12) comme moyen de travail, auquel cas le ralentisseur (14) est entraîné en permanence par le moteur à combustion interne (12), est alimenté en liquide de refroidissement en mode de freinage, et renvoie le moyen de travail liquide de refroidissement par pompage dans le circuit de refroidissement du moteur à combustion interne (12) pendant la transition du mode de freinage à l'opération de coupure du mode de non freinage et présente une vanne de décompression (36) prévue pour l'opération de repompage, qui est disposée entre le ralentisseur (14) et un vase d'expansion (22), auquel cas le vase d'expansion (22) possède une pression de système qui se règle en fonction de l'expansion du moyen de refroidissement et de l'expansion de l'air dans le vase d'expansion (22), et avec une alimentation en air comprimé à bord, **caractérisé en ce que** le signal de coupure du ralentisseur (14) est employé par le dispositif de pilotage (30) de mise en marche du ralentisseur (14) et la pression dans le vase d'expansion (22) est abaissée au niveau de la pression atmosphérique pendant le temps de l'opération de coupure via une électrovalve de commutation (38) et via une valve de décompression (40), et, après l'opération de coupure du ralentisseur (14) et à chaque nouveau démarrage du véhicule, la pression dans le vase d'expansion est amenée immédiatement à une pression de système réglable via l'alimentation en air comprimé (32) et par l'intermédiaire de la disposition de valves (38, 44, 40).
